# EUROPÄISCHE PATENTSCHRIFT

(11) **EP 0 389 883 B1**
(45) Veröffentlichungstag und Bekanntmachung des Hinweises auf die Patenterteilung: **01.02.1995**
(21) Anmeldenummer: 90104954.4
(22) Anmeldetag: 16.03.1990
(51) Int. Cl.: B32B 27/08, B32B 27/30, B32B 27/34

(54) **Metallschichtfreie Verbundfolien**
Composite films without metal layer
Feuilles composites exemptes de couche métallique

(30) Priorität: 29.03.1989 DE 3910103
(43) Veröffentlichungstag der Anmeldung: 03.10.1990
(73) Patentinhaber: Wolff Walsrode Aktiengesellschaft, D-29655 Walsrode (DE)
(72) Erfinder: Lund, Klaus, Dr., D-3030 Walsrode 14 (DE); Preiss, Holger, Di., D-2722 Visselhövede (DE)
(74) Vertreter: Zobel, Manfred, Dr.

(56) Entgegenhaltungen:
- EP-A- 0 076 366
- EP-A- 0 167 956
- CH-A- 663 379
- DE-A- 3 035 474

## Beschreibung

Die Erfindung betrifft Verbundfolien mit einer besonders hohen Sperrwirkung gegenüber Gasen und Wasserdampf, ohne daß eine Metallschicht, z.B. aus Aluminium, enthalten sein muß.

Für die Verpackung von besonders empfindlichen Füllgütern, z.B. von Produkten, die durch Sauerstoff oxidativ verändert werden oder die durch Feuchtigkeitsaufnahme die Gebrauchsfähigkeit verlieren, ist es bekannt, diese Produkte unter Vakuum oder Schutzgas zu verpacken. Um das Vakuum bzw. das Schutzgas über längere Zeit in der Packung zu erhalten, muß die Umhüllung entsprechend gasdicht sein. Es ist bereits bekannt, als Umhüllung Verbundfolien zu verwenden, die eine Metallschicht, z.B. aus Aluminium, aufweisen Metallhaltige Folien erlauben aber keine Sicht auf das Füllgut, sind empfindlich gegen Knickbruch und weisen infolge der Anwesenheit einer Metallschicht eine hohe Leitfähigkeit auf. Zudem sind sie gegebenenfalls korrosionsanfällig.

Es sind auch bereits metallschichtfreie Hohlkörper bzw. Verbundfolien bekannt, die Sperrschichten aufweisen, siehe EP-A-0 076 366, 0 062 815 und 0 208 075. Die bekannten metallschichtfreien Verbundfolien entsprechen in ihren Eigenschaften aber noch nicht in allen Eigenschaften den metallschichthaltigen Verbundfolien, insbesondere in bezug auf die zeitabhängige Konstanz der Sperrwirkung. Bei der EP-A- 0 076 366 handelt es sich um ein Dokument, das Hohlkörper wie z.B. Flaschen zum Inhalt hat.

Der Erfindung liegt die Aufgabe zugrunde eine verbesserte Verbundfolie bereitzustellen, die in ihren Eigenschaften einer metallschichthaltigen Verbundfolie entspricht ohne aber deren Nachteile aufzuweisen.

Gegenstand der Erfindung ist eine metallschichtfreie, sperrschichthaltige Mehrschichtfolie, dadurch gekennzeichnet, daß sie folgenden Schichtaufbau aufweist:
A) eine mit einem Schutzlack versehene Polyvinylalkoholschicht,
B1) gegebenenfalls eine Verbindungs- oder Klebeschicht,
C1) eine Polyolefinschicht,
B2) gegebenenfalls eine Verbindungs- oder Klebeschicht,
D) eine wenigstens einseitig mit einer Polyamidschicht versehene Ethylenvinylalkoholschicht,
B3) gegebenenfalls eine Verbindungs- oder Klebeschicht,
C2) eine Polyolefinschicht.

Die Polyvinylalkoholschicht A) besteht vorzugsweise aus einem Ethylen/Vinylacetat-Copolymerisat, das aus 40 bis 85, insbesondere 60 bis 75 Mol-%. Vinylacetateinheiten besteht, die zu mindestens 90 %, vorzugsweise zu mehr als 95 Mol-% verseift sind. Eine ganz besonders bevorzugte Polyvinylalkoholschicht besteht aus mehr als 95 Mol-% verseiften Polyvinylacetateinheiten. Die daraus hergestellte Folie wird biaxial gereckt.

In einer bevorzugten Ausführungsform ist die Polyvinylalkoholschicht A) ein- oder insbesondere beidseitig mit Polyvinylidenchlorid (PVDC) umgeben, insbesondere lackiert.

Die gegebenenfalls mit PVDC lackierte Polyvinylalkoholschicht A) ist in einer bevorzugten Ausführungsform mit den folgenden Schichten über eine Verbindungs- oder Klebeschicht B1) verbunden Für eine Klebeschicht wird insbesondere ein handelsüblicher Zweikomponentenpolyurethankleber verwendet.

Bei der Schicht B1) kann es sich aber auch um eine Verbindungsschicht aus einem Polyolefin handeln.

Die Olefinschicht C1) besteht im wesentlichen aus einem Olefin. Besonders bevorzugte Polyolefine sind: Polypropylene, Polyethylenhomopolymere (LDPE, MDPE, HDPE) und Polyethylencopolymere,
EBA (= Ethylenbutylacrylat),
EAA (= Ethylenacrylsäure),
EEA (= Ethylenethylacetat) und
Ionomerharze, insbesondere aus einem Ethylen-Methacrylsäure-Copolymeren (= EMA), dessen Kettenmoleküle über Ionenbindung, insbesondere über Zinkionen, vernetzt sind.

Die Schicht B2) besteht im wesentlichen aus den unter B1) angegebenen Komponenten.

Als Gassperrschicht D) wird insbesondere eine Ethylenvinylalkoholschicht genommen mit einem Gehalt von Vinylalkohol von vorzugsweise 40 Mol-%. bis 90 Mol-%, bezogen auf das Ethylenvinylalkoholcopolymere.

In einer besonders bevorzugten Ausführungsform hat die Ethylenvinylalkoholschicht D) einen Vinylalkoholgehalt zwischen 65 und 75 Mol-% bezogen auf das Ethylenvinylalkoholcopolymer und ein- oder insbesondere beidseitig umgeben von einer Polyamidschicht E), beispielsweise einem Polyamid-6. In einer ganz bevorzugten Ausführungsform wird ein coextrudierter Verbund aus den Schichten E1), D), E2) in die erfindungsgemäße Folie eingebracht.

Soweit eine Verbindungs- oder Klebeschicht B3) enthalten ist, kann sie eine der unter B1) und B2) Komponenten aufweisen.

Die Polyolefinschicht C2) besteht im wesentlichen aus einer der unter Schicht C1) angegebenen Komponenten. Besonders bevorzugt wird als Polyethylen ein LLDPE (= Linear Low Density Polyethylen). Die einzelnen Schichten weisen vorzugsweise folgende Dicken in »m auf:
Schicht A) gegebenenfalls PVDC lackiert: 10 bis 20 »m,
B1): 0,1 bis 10 »m, soweit ein Kleber verwendet wird,
C1): 5 bis 500 »m,
B2): 0,2 bis 10 »m, soweit ein Kleber verwendet wird bzw.5 bis 500 »m, soweit ein Polyolefin als Verbinder verwendet wird,
Schicht D): 1 bis 50 »m,
Schichten E): jeweils 5 bis 100 »m,
Schicht B3): 0,2 bis 10 »m, soweit ein Kleber verwendet wird,
Schicht C2): 5 bis 500 »m.

In einer bevorzugten Ausführungsform ist wenigstens eine Schicht des Folienverbundes gereckt, insbesondere wird es bevorzugt, daß die Schicht A) biaxial gereckt ist.

Die Verbundfolie kann in den einzelnen Schichten mit üblichen Additiven und Hilfsmitteln wie z.B. Gleitmitteln, Antiblockmitteln und Antistatika in üblichen Mengen ausgerüstet werden. Bevorzugte Zusätze sind gesättigte oder ungesättigte Fettsäureamide.

Die erfindungsgemäße Verbundfolie weist vorzugsweise eine Gesamtdicke von 100 bis 1500 »m, insbesondere von 150 bis 500 »m auf. Eine ganz besonders bevorzugte erfindungsgemäße Verbundfolie zeichnet sich durch folgende Eigenschaften aus:
Durchlässigkeit gegen Wasserdampf
(bestimmt gemäß DIN 53 122): <0,1 g/m² .Tag
Durchlässigkeit gegen Sauerstoff
(gemäß DIN 53 380): (0,1 cm³ /m² .d.bar

Die Dichtigkeit der Folie gegen Wasserdampf und Gas ist unerwartet hoch, ein Vakuum in einem Beutel aus der erfindungsgemäßen Folie, gefüllt mit Füllkörpern, hält sich unerwartet lange.

Die erfindungsgemäße Folie ist insbesondere geeignet zur Verpackung wasserdampf- und gasempfindlicher Füllgüter sowie für die Verpackung von Füllkörpern, die unter Vakuum stehen müssen. Beispielsweise lassen sich Aromastoffe und ähnliches, wie z.B. Hopfen, in Beuteln aus der erfindungsgemäßen Verbundfolie lange Zeit lagern ohne beeinträchtigt zu werden.

### Beispiel 1

Eine erfindungsgemäße Folie mit dem im folgenden angegebenen Schichtaufbau wurde hergestellt:
- A:: beidseitig PVDC lackierte Polyvinylalkoholschicht, Dicke 15 »m
- B1:: Klebeschicht aus einem Zweikomponentenpolyurethankleber, Dicke 2 »m
- C1:: Polyolefinschicht aus LLDPE,
Dicke 50 »m
- B2:: Verbindungsschicht aus Zweikomponentenpolyurethankleber, Dicke 2 »m
- D:: beidseitig mit Polyamid verstärkte Ethylenvinylalkoholschicht D (Dicke der Polyamidschichten jeweils 37,5 »m, Dicke der Ethylenvinylalkoholschicht 5 »m)
- B3:: Polyurethanklebstoffschicht, Dicke 2»m
- C2:: Polyolefinschicht aus Linear Low Density Polyethylen, Dicke 100 »m
Die einzelnen Schichtbestandteile sind im folgenden näher angegeben:
- A:: Die Polyvinylalkoholschicht ist biaxial gereckt.
- B1, B2, B3:: Handelsübliche Zweikomponenten-Kaschier-Kleber.
- C1, C2:: Blasfolien-Polyethylen aus LLDPE
Dichte: 0,935,
Schmelzindex: 0,5 g/10 min.
- D, E:: Coextrudierte Verbundfolie aus Polyamid-6 und Ethylenvinylalkohol-Copolymer.

### Beispiel 2

Eine erfindungsgemäße Folie mit dem im folgenden angegebenen Schichtaufbau wurde hergestellt:
- A:: beidseitig PVDC lackierte Polyvinylalkoholschicht, Dicke 15 »m
- B1:: Klebeschicht aus einem Zweikomponentenpolyurethankleber, Dicke 2 »m
- C1:: Polyolefinschicht aus LLDPE, Dicke 50 »m
- B2:: Verbindungsschicht aus Polyethylen niedriger Dichte, Dicke 50 »m
- D:: beidseitig mit Polyamid verstärkte Ethylenvinylalkoholschicht D (Dicke der Polyamidschichten jeweils 37,5 »m, Dicke der Ethylenvinylalkoholschicht 5 »m)
- B3:: Polyurethanklebstoffschicht, Dicke 2 »m
- C2:: Polyolefinschicht aus Linear Low Density Polyethylen, Dicke 120 »m
Die einzelnen Schichtbestandteile entsprechen denen des Beispiels 1, wobei aber die Schicht B2 aus einem Polyethylen niedriger Dichte für Extrusionskaschierung besteht.

Die Folie wurde in an sich bekannter Weise durch Klebkaschierung und Coextrusion hergestellt.

Die Folie wurde nach einer Lagerung (Temperatur 23°C), 50 % rel. Feuchte) folgenden Untersuchungen unterzogen und zeigte die angegebenen Ergebnisse:
1) Prüfung der Durchlässigkeit für die Gase:
   Sauerstoff,
   Stickstoff,
   Kohlendioxid.
   Prüfatmosphäre: 23°C; 0 % rel. Feuchte.

   - Ergebnisse:: Für alle geprüften Gase ist die Durchlässigkeit <0,1 cm³/m² .Tag.bar und liegt unterhalb der Nachweisgrenze der üblichen Meßmethoden.
2) Prüfung der Durchlässigkeit für Wasserdampf:
   Prüfatmosphäre: 23°C; 85 % rel. Feuchte.
   Ergebnis: Durchlässigkeit <0,1 g/m² .d.

## Patentansprüche

1. Metallschichtfreie, sperrschichthaltige Mehrschichtfolie, dadurch gekennzeichnet, daß sie folgenden Schichtaufbau aufweist:
A) eine mit einem Schutzlack versehene Polyvinylalkoholschicht,
B1) gegebenenfalls eine Verbindungs- oder Klebeschicht,
C1) eine Polyolefinschicht,
B2) gegebenenfalls eine Verbindungs- oder Klebeschicht,
D) eine wenigstens einseitig mit einer Polyamidschicht versehene Ethylenvinylalkoholschicht,
B3) gegebenenfalls eine Verbindungs- oder Klebeschicht,
C2) eine Polyolefinschicht.

2. Verbundfolie nach Anspruch 1, dadurch gekennzeichnet, daß die Schicht A) beidseitig mit PVDC lackiert ist und die Schicht D) beidseitig mit einer Polyamidschicht verstärkt ist.

3. Verbundfolie nach wenigstens einem der vorhergehenden Ansprüche, dadurch gekennzeichnet, daß die einzelnen Schichten folgende Dicke aufweisen:
Schicht A: 10 bis 20 »m inklusive Lackschicht,
B1: 0,2 bis 10 »m soweit ein Kleber verwendet wird,
C1: 5 bis 500 »m
B2; 0,2 bis 10 »m soweit eine Klebeschicht und 5 bis 500 »m soweit eine Verbindungsschicht verwendet wird,
D: 1 bis 50 »m,
E: 5 bis 100 »m,
B3: 0,2 bis 10 »m soweit eine Klebeschicht verwendet wird,
C2: 5 bis 500 »m.

4. Verbundfolie nach wenigstens einem der vorhergehenden Ansprüche, dadurch gekennzeichnet, daß wenigstens einzelne Schichten gereckt sind.

5. Verbundfolie nach wenigstens einem der vorhergehenden Ansprüche, dadurch gekennzeichnet, daß die Schicht A biaxial gereckt ist.

6. Verbundfolie nach wenigstens einem der vorhergehenden Ansprüche, dadurch gekennzeichnet, daß die Schichten B1 und B3 im wesentlichen aus einem Zweikomponentenpolyurethankleber bestehen.

7. Verwendung der Verbundfolie gemäß wenigstens einem der vorhergehenden Ansprüche zur Verpackung von Füllgütern unter Ausschluß von Wasserdampf und Gas.

## Claims

1. A multilayer film having no metal layer, but containing a barrier layer, characterized in that it essentially comprises the following layers:
A) a polyvinyl alcohol layer coated with a protective lacquer,
B1) optionally a coupling or adhesive layer,
C1) a polyolefin layer,
B2) optionally a coupling or adhesive layer,
D) an ethylene/vinyl alcohol layer provided on at least one side with a polyamide layer,
B3) optionally a coupling or adhesive layer,
C2) a polyolefin layer.

2. A composite film as claimed in claim 1, characterized in that layer A) is lacquered on both sides with PVDC and layer D) is reinforced on both sides with a polyamide layer.

3. A composite film as claimed in at least one of the preceding claims, characterized in that the individual layers preferably have the following thicknesses: layer A: 10 to 20 »m, including the lacquer layer,
B1: 0.2 to 10 »m where an adhesive is used,
C1: 5 to 500 »m,
B2: 0.2 to 10 »m where an adhesive layer is used or 5 to 500 »m where a coupling layer is used,
D: 1 to 50 »m,
E: 5 to 100 »m,
B3: 0.2 to 10 »m where an adhesive layer is used,
C2: 5 to 500 »m.

4. A composite film as claimed in at least one of the preceding claims, characterized in that at least individual layers are stretched.

5. A composite film as claimed in at least one of the preceding claims, characterized in that layer A is biaxially stretched.

6. A composite film as claimed in at least one of the preceding claims, characterized in that layers B1 and B3 consist essentially of a two-component polyurethane adhesive.

7. The use of the composite film claimed in at least one of the preceding claims for the packaging of products in the absence of water vapour and gas.

## Revendications

1. Feuille multicouche contenant une couche barrière et dépourvue de couche métallique, caractérisée en ce qu'elle présente la structure de couches suivante :
A) une couche de polymère d'alcool vinylique pourvue d'un vernis protecteur,
B1) le cas échéant, une couche de liaison ou couche adhésive,
C1) une couche de polyoléfine,
B2) le cas échéant, une couche de liaison ou couche adhésive,
D) une couche d'éthylène-alcool vinylique pourvue au moins d'un côté d'une couche de polyamide,
B3) le cas échéant, une couche de liaison ou couche adhésive,
C2) une couche de polyoléfine.

2. Feuille composite selon la revendication 1, caractérisée en ce que la couche A) est vernie au PVDC des deux côtés et en ce que la couche D) est renforcée des deux côtés par une couche de polyamide.

3. Feuille composite suivant l'une au moins des revendications précédentes, caractérisée en ce que les couches individuelles présentent l'épaisseur suivante :
Couche A) 10 à 20 »m, y compris la couche de vernis.
B1) 0,2 à 10 »m, dans la mesure où on utilise un adhésif,
C1) 5 à 500 »m,
B2) 0,2 à 10 »m dans la mesure où on utilise une couche adhésive, ou bien 5 à 500 »m dans la mesure où on utilise une couche de liaison,
Couche D) : 1 à 50 »m,
Couche E) : 5 à 100 »m,
Couche B3) : 0,2 à 10 »m, dans la mesure où on utilise une couche adhésive,
Couche C2) : 5 à 500 »m.

4. Feuille composite suivant l'une au moins des revendications précédentes, caractérisée en ce qu'au moins certaines couches sont orientées.

5. Feuille composite suivant l'une au moins des revendications précédentes, caractérisée en ce que la couche A est orientée biaxialement.

6. Feuille composite suivant l'une au moins des revendications précédentes, caractérisée en ce que les couches B1 et B3 sont principalement constituées d'un adhésif au polyuréthanne à deux composants.

7. Utilisation de la feuille composite suivant au moins l'une des revendications précédentes pour l'emballage de denrées à l'abri de la vapeur d'eau et du gaz.
